# EUROPEAN PATENT SPECIFICATION

(11) **EP 3 833 059 B1**
(45) Date of publication and mention of the grant of the patent: **28.10.2026**
(21) Application number: 18929736.9
(22) Date of filing: 07.08.2018
(51) Int. Cl.: H04W 4/029, H04W 4/40, G08G 5/00

(54) **METHOD AND DEVICE FOR TRANSMITTING FLIGHT INFORMATION**
VERFAHREN UND VORRICHTUNG ZUM SENDEN VON FLUGINFORMATIONEN
PROCÉDÉ ET DISPOSITIF DE TRANSMISSION D'INFORMATIONS DE VOL

(43) Date of publication of application: 09.06.2021
(73) Proprietor: Beijing Xiaomi Mobile Software Co., Ltd., Beijing 100085 (CN)
(72) Inventor: HONG, Wei, Beijing 100085 (CN)
(74) Representative: Gevers Patents
(86) International application number: PCT/CN2018/099175
(87) International publication number: WO 2020/029072

(56) References cited:
- EP-A1- 3 809 730
- WO-A1-2019/237314
- CN-A- 108 064 360
- CN-A- 108 064 360
- CN-A- 108 886 668
- US-A1- 2017 311 290

## Description

### TECHNICAL FIELD

The present disclosure relates to the field of communication technology, and in particular relates to a method and device for transmitting flight information. The related art can be known from CN108064360A.

### BACKGROUND

With the development of science and technology, unmanned aerial vehicles have gradually shifted from military to civilian use. Unmanned aerial vehicles are no longer short-distance remote control aircrafts, but can fly a long distance according to pre-set routes. Industry insiders have proposed that mobile cellular networks can provide services for unmanned aerial vehicles. However, there is no effective solution for what kind of service to provide and how to provide the service. The premise of providing services is that the network side can obtain flight information, but there is no effective solution for how to obtain flight information.

WO 2019/237314 A1 discloses provides an information transmission method and apparatus. The method includes: obtaining flight path information on the UAV; sending the flight path information to a target base station for the target base station to provide network service to the UAV according to the flight path information.

### SUMMARY

The embodiments of the present disclosure provide a method and device for transmitting flight information. The invention is set out in the appended set of claims.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a flow chart showing a method for transmitting flight information according to an exemplary embodiment.
FIG. 2 is a flow chart showing a method for transmitting flight information according to an exemplary embodiment.
FIG. 3 is a flow chart showing a method for transmitting flight information according to an exemplary embodiment.
FIG. 4 is a flow chart showing a method for transmitting flight information according to an exemplary embodiment.
FIG. 5 is a block diagram illustrating a device for transmitting flight information not being part of the invention.
FIG. 6 is a block diagram illustrating a sending module not being part of the invention.
FIG. 7 is a block diagram illustrating a sending module not being part of the invention.
FIG. 8 is a block diagram illustrating a device for transmitting flight information not being part of the invention.
FIG. 9 is a block diagram illustrating a device suitable for transmitting flight information according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

In the related art, industry insiders have proposed that mobile cellular networks may provide services for unmanned aerial vehicles. However, there is no effective solution for what kind of service to provide and how to provide the service.

The inventor of the present disclosure found that the basis of providing services is that a base station needs to know the flight path information of an unmanned aerial vehicle, so that the base station can better plan a home cell for the unmanned aerial vehicle according to the flight path, which provides a reference for selecting a target cell. The base station may also provide other services for an unmanned aerial vehicle based on the flight path information, which are not listed here. Therefore, how to obtain the flight path information of an unmanned aerial vehicle is an urgent problem to be solved.

In order to solve the above-mentioned problems, in the present embodiment, during the handover process, a source base station sends flight path information to a target base station, to increase an information source for the target base station to obtain flight path information, thereby facilitating the target base station to obtain the flight path of an unmanned aerial vehicle, and better providing services for the unmanned aerial vehicle.

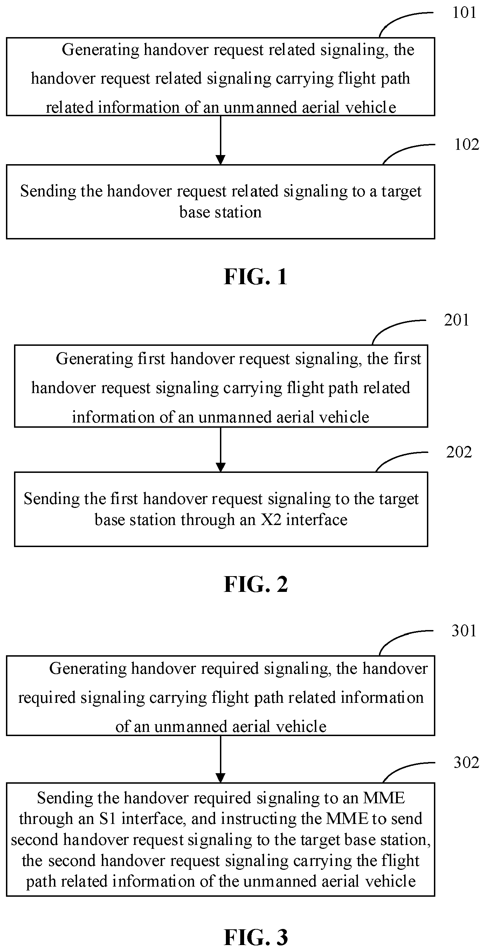

FIG. 1 is a flow chart showing a method for transmitting flight information according to an exemplary embodiment. The method for transmitting flight information is used in access network equipment such as a base station. As illustrated in FIG. 1, the method includes the following operations at block 101-102.

At block 101, handover request related signaling is generated, the handover request related signaling carrying flight path related information of an unmanned aerial vehicle.

At block 102, the handover request related signaling is sent to a target base station.

In the present embodiment, during the handover process, flight path related information may be sent from a source base station to a target base station, so that the target base station better plans a cell for an unmanned aerial vehicle and other user equipment according to flight path related information, or provides other services for the unmanned aerial vehicle. The target base station may obtain the flight path related information more timely. For example, the flight path related information includes the number of flight path points, flight path point information, etc.

The target base station may receive and parse the handover request related signaling to obtain the flight path related information. The target base station may obtain the flight path related information from the source base station, and the source base station is used as an information source for obtaining the flight path related information, so that the target base station may obtain the flight path related information in time.

The following example is not according to the invention and is present for illustration purposes only.

The handover request related signaling includes first handover request signaling; and
the operation at block 102 includes step A.

In the step A, the first handover request signaling is sent to a target base station through an X2 interface (an interface between two base stations).

In the present embodiment, if the source base station and the target base station have X2 interfaces, the first handover request signaling can be transmitted through the X2 interface. The present embodiment improves the first handover request signaling, so that the first handover request signaling can carry flight path related information, and transmission of the flight path related information during the handover process is realized.

In one embodiment, an RRC context information element in the first handover request signaling carries flight path related information of an unmanned aerial vehicle.

The present embodiment uses the RRC context information element (IE) in the first handover request signaling to carry the flight path related information, which provides a feasible solution for carrying the flight path related information.

In one embodiment, the handover preparation information signaling in the RRC context information element carries flight path related information of an unmanned aerial vehicle.

The present embodiment further improves the RRC context information element, uses the handover preparation information signaling therein to carry flight path related information, which provides a feasible solution for carrying the flight path related information.

In one embodiment, access stratum context signaling in the handover preparation information signaling carries flight path related information of an unmanned aerial vehicle.

The present embodiment further improves the handover preparation information signaling, uses the access stratum context (AS-context) signaling therein to carry flight path related information, which provides a feasible solution for carrying the flight path related information.

An example of the access stratum context signaling is shown as follows:

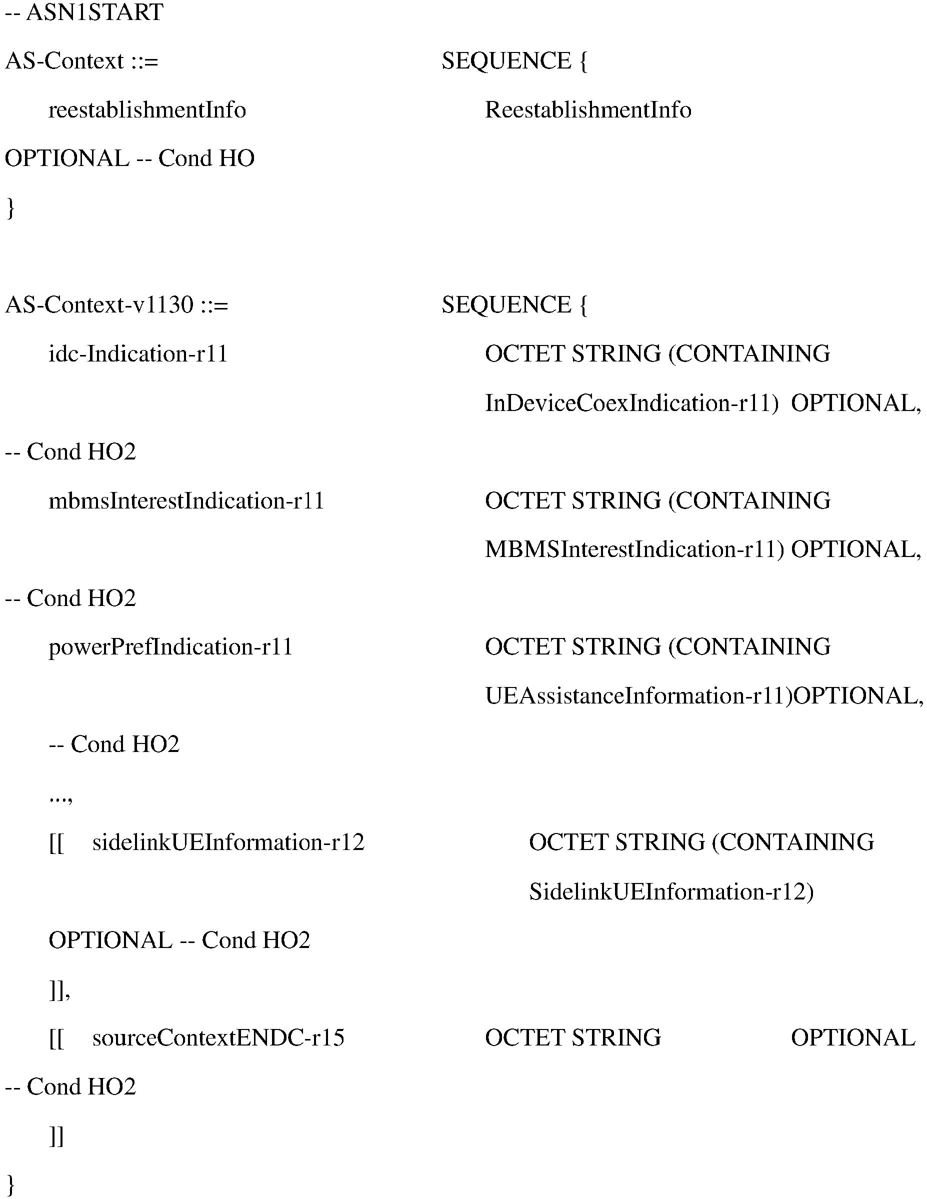

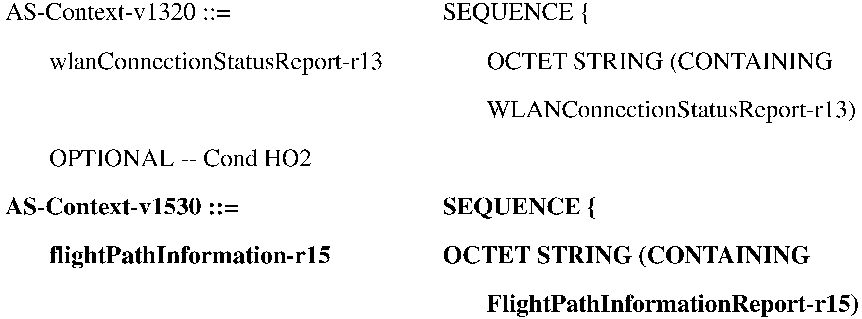

OPTIONAL -- Cond HO2//The present embodiment newly adds AS-Context signaling. v1530 is the version number, and is used to indicate the newly added AS-Context signaling carrying the flight path related information of an unmanned aerial vehicle. FlightPathInformationReport-r15 is an information element for flight path information report which is newly added in the present embodiment, and is used for carrying flight path related information. r15 is the version number, and is used to indicate the information element for flight path information report which carries flight path related information of an unmanned aerial vehicle. }
-- ASN1STOP

The handover request related signaling includes handover required signaling; and
the operation at block 102 includes step B.

In step B, the handover required signaling is sent to an MME through an S1 interface (an interface between a base station and a core network), and the MME is instructed to send second handover request signaling to a target base station, the second handover request signaling carrying flight path related information of an unmanned aerial vehicle.

In the present embodiment, if a source base station and a target base station do not have an X2 interface, forwarding may be performed through the MME. Therefore, in the present embodiment, the handover required signaling is sent to the MME through the S1 interface, realizing that during the handover process, even if the source base station and the target base station cannot directly transmit information, the target base station can obtain flight path related information.

The present embodiment improves the handover required signaling and the second handover request signaling, so that the handover required signaling and the second handover request signaling may carry flight path related information, and transmission of the flight path related information during the handover process is realized.

In one embodiment, a source to target transparent container information element in the handover required signaling carries flight path related information of an unmanned aerial vehicle.

The present embodiment uses a source to target transparent container information element in the handover required signaling to carry flight path related information, which provides a feasible solution for carrying the flight path related information.

In one embodiment, a source to target transparent container information element in the second handover request signaling carries flight path related information of an unmanned aerial vehicle.

The present embodiment uses a source to target transparent container information element in the second handover request signaling to carry flight path related information, which provides a feasible solution for carrying the flight path related information.

In one embodiment, the handover preparation information signaling in the source to target transparent container information element carries flight path related information of an unmanned aerial vehicle.

The present embodiment further improves the source to target transparent container information element, uses the handover preparation information signaling therein to carry flight path related information, which provides a feasible solution for carrying the flight path related information.

Access stratum context signaling in the handover preparation information signaling carries flight path related information of an unmanned aerial vehicle.

The present embodiment further improves the handover preparation information signaling, uses the access stratum context signaling therein to carry flight path related information, which provides a feasible solution for carrying the flight path related information.

The following describes the implementation process in detail through embodiments.

FIG. 2 is a flow chart showing a method for transmitting flight information according to an exemplary embodiment. The method for transmitting flight information is used in access network equipment such as a base station. As illustrated in FIG. 2, the method includes the following operations at blocks 201-202.

At block 201, first handover request signaling is generated, the first handover request signaling carrying flight path related information of an unmanned aerial vehicle.

At block 202, the first handover request signaling is sent to a target base station through an X2 interface.

FIG. 3 is a flow chart showing a method for transmitting flight information according to an exemplary embodiment. The method for transmitting flight information is used in access network equipment such as a base station. As illustrated in FIG. 3, the method includes the following operations at blocks 301-302.

At block 301, handover required signaling is generated, the handover required signaling carrying the flight path related information of the unmanned aerial vehicle.

At block 302, the handover required signaling is sent to an MME through an S1 interface, and the MME is instructed to send second handover request signaling to a target base station, the second handover request signaling carrying the flight path related information of the unmanned aerial vehicle.

The present embodiment also improves the MME that, the MME may receive and parse handover required signaling carrying flight path related information of an unmanned aerial vehicle. Triggered by the handover required signaling, the target base station sends the second handover request signaling. Therefore, the implementation process of the MME is introduced below.

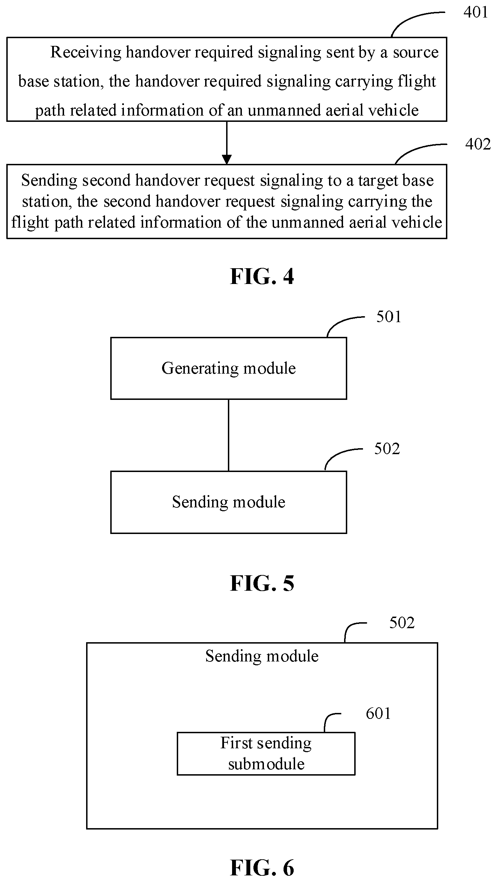

FIG. 4 is a flow chart showing a method for transmitting flight information according to an exemplary embodiment. The method for transmitting flight information is used in core network equipment such as an MME. As illustrated in FIG. 4, the method includes the following operations at blocks 401-402.

At block 401, handover required signaling sent by a source base station is received, the handover required signaling carrying flight path related information of an unmanned aerial vehicle.

At block 402, second handover request signaling is sent to a target base station, the second handover request signaling carrying the flight path related information of the unmanned aerial vehicle.

In the present embodiment, the MME receives and parses handover required signaling carrying flight path related information of an unmanned aerial vehicle. Triggered by the handover required signaling, the target base station sends the second handover request signaling. Indirect transmission of flight path related information between a source base station and a target base station is realized, and a feasible solution is provided for indirect transmission of the flight path related information between the source base station and the target base station.

In one embodiment, a source to target transparent container information element in the handover required signaling carries flight path related information of an unmanned aerial vehicle.

The present embodiment uses a source to target transparent container information element in the handover required signaling to carry flight path related information, which provides a feasible solution for carrying the flight path related information.

In one embodiment, a source to target transparent container information element in the second handover request signaling carries flight path related information of an unmanned aerial vehicle.

The present embodiment uses a source to target transparent container information element in the second handover request signaling to carry flight path related information, which provides a feasible solution for carrying the flight path related information.

In one embodiment, the handover preparation information signaling in the source to target transparent container information element carries flight path related information of an unmanned aerial vehicle.

The present embodiment further improves the source to target transparent container information element, uses the handover preparation information signaling therein to carry flight path related information, which provides a feasible solution for carrying the flight path related information.

Access stratum context signaling in the handover preparation information signaling carries flight path related information of an unmanned aerial vehicle.

The present embodiment further improves the handover preparation information signaling, uses the access stratum context signaling therein to carry flight path related information, which provides a feasible solution for carrying the flight path related information.

The above embodiments may be freely combined according to actual needs.

The following are device embodiments of the present disclosure, and may be used to implement the method embodiments of the present disclosure.

The following example is not according to the invention and is present for illustration purposes only.

FIG. 5 is a block diagram illustrating a device for transmitting flight information not being part of the invention. The device may be implemented as part or all of electronic equipment through software, hardware or a combination of both, and is applied to a base station. Referring to FIG. 5, the device for transmitting flight information includes a generating module 501 and a sending module 502.

The generating module 501 is configured to generate handover request related signaling, the handover request related signaling carrying flight path related information of an unmanned aerial vehicle; and
The sending module 502 is configured to send the handover request related signaling to a target base station.

The handover request related signaling includes first handover request signaling.

As illustrated in FIG. 6 not being part of the invention, the sending module 502 includes a first sending submodule 601.

The first sending submodule 601 is configured to send the first handover request signaling to the target base station through an X2 interface.

An RRC context information element in the first handover request signaling carries flight path related information of an unmanned aerial vehicle.

The handover preparation information signaling in the RRC context information element carries flight path related information of an unmanned aerial vehicle.

Access stratum context signaling in the handover preparation information signaling carries flight path related information of an unmanned aerial vehicle.

The handover request related signaling includes handover required signaling.

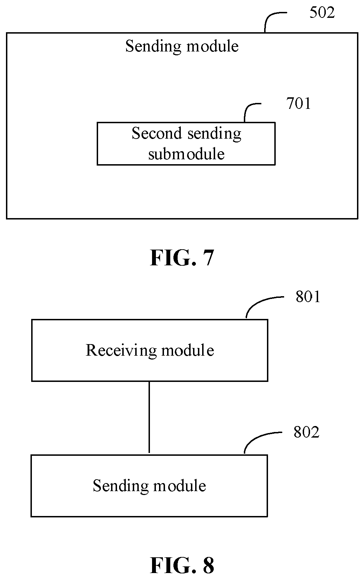

As illustrated in FIG. 7 not being part of the invention, the sending module 502 includes a second sending submodule 701.

The second sending submodule 701 is configured to send the handover required signaling to an MME through an S1 interface, and instruct the MME to send second handover request signaling to a target base station, the second handover request signaling carrying flight path related information of an unmanned aerial vehicle.

A source to target transparent container information element in the handover required signaling carries flight path related information of an unmanned aerial vehicle.

A source to target transparent container information element in the second handover request signaling carries flight path related information of an unmanned aerial vehicle.

The handover preparation information signaling in the source to target transparent container information element carries flight path related information of an unmanned aerial vehicle.

Access stratum context signaling in the handover preparation information signaling carries flight path related information of an unmanned aerial vehicle.

The following example is not according to the invention and is present for illustration purposes only.

FIG. 8 is a block diagram illustrating a device for transmitting flight information not being part of the invention. The device may be implemented as part or all of electronic equipment through software, hardware or a combination of both, and is applied to an MME. Referring to FIG. 8, the device for transmitting flight information includes a receiving module 801 and a sending module 802.

The receiving module 801 is configured to receive handover required signaling sent by a source base station, the handover required signaling carrying flight path related information of an unmanned aerial vehicle; and
The sending module 802 is configured to send second handover request signaling to a target base station, the second handover request signaling carrying the flight path related information of the unmanned aerial vehicle.

A source to target transparent container information element in the handover required signaling carries flight path related information of an unmanned aerial vehicle.

A source to target transparent container information element in the second handover request signaling carries flight path related information of an unmanned aerial vehicle.

The handover preparation information signaling in the source to target transparent container information element carries flight path related information of an unmanned aerial vehicle.

Access stratum context signaling in the handover preparation information signaling carries flight path related information of an unmanned aerial vehicle.

Regarding the devices in the foregoing embodiments, the specific manner in which each module performs operations has been described in detail in the embodiments of the methods, and detailed description will not be given here.

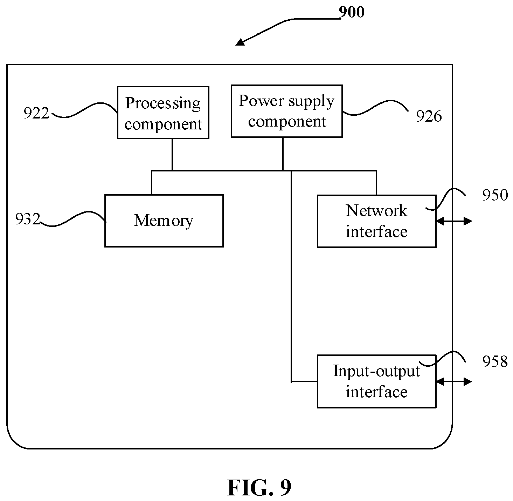

FIG. 9 is a block diagram illustrating a device 900 for synchronizing data according to an exemplary embodiment. For example, the device 900 may be provided as a computer. Referring to FIG. 9, the device 900 includes a processing component 922 which further includes one or more processors, and a memory resource represented by a memory 932, which is configured to store instructions, such as an application program, that can be executed by the processing component 922. The application program stored in the memory 932 may include one or more modules each corresponding to a set of instructions. In addition, the processing component 922 is configured to execute instructions to execute the above-mentioned method for synchronizing data.

The device 900 may further include a power supply component 926 configured to execute power management of the device 900, a wired or wireless network interface 950 configured to connect the device 900 to a network, and an input/output (I/O) interface 958. The device 900 may operate based on an operating system stored in the memory 932, for example, Windows ServerTM, Mac OS XTM, UnixTM, LinuxTM, FreeBSDTM or the like.

Other embodiments of the present disclosure will be apparent to those skilled in the art from consideration of the specification and practice of the present disclosure here.

It should be understood that the scope of the present invention is defined by the appended claims.

## Claims

1. A method for transmitting flight information, applied to a base station side, comprising:
generating handover request related signaling, the handover request related signaling carrying flight path related information of an unmanned aerial vehicle (101); and
sending the handover request related signaling to a target base station (102),
wherein the handover request related signaling comprises handover required signaling,
wherein sending the handover request related signaling to the target base station (102) comprises:
sending the handover required signaling to a Mobility Management Entity, MME, through an S1 interface, and instructing the MME to send second handover request signaling to the target base station, the second handover request signaling carrying the flight path related information of the unmanned aerial vehicle (302),
wherein a source to target transparent container information element in the handover required signaling carries the flight path related information of the unmanned aerial vehicle,
**characterized in that** access stratum context signaling in handover preparation information signaling in the source to target transparent container information element carries the flight path related information of the unmanned aerial vehicle.

2. The method of claim 1, wherein a source to target transparent container information element in the second handover request signaling carries the flight path related information of the unmanned aerial vehicle.

3. The method of claim 1, wherein a version number of the access stratum context signaling is v1530.

4. The method of claim 3, wherein the access stratum context signaling comprises FlightPathInformationReport-r15, the FlightPathInformationReport-r15 is an information element for flight path information report, and is used for carrying flight path related information, and r15 is a version number, and is used to indicate the information element for flight path information report.

5. A method for transmitting flight information, applied to a Mobility Management Entity, MME, side, comprising:
receiving handover required signaling sent by a source base station, the handover required signaling carrying flight path related information of an unmanned aerial vehicle (401); and
sending second handover request signaling to a target base station, the second handover request signaling carrying the flight path related information of the unmanned aerial vehicle (402),
wherein a source to target transparent container information element in the handover required signaling carries the flight path information of the unmanned aerial vehicle,
**characterized in that** access stratum context signaling in handover preparation information signaling in the source to target transparent container information element carries the flight path related information of the unmanned aerial vehicle.

6. The method of claim 5, wherein a source to target transparent container information element in the second handover request signaling carries the flight path related information of the unmanned aerial vehicle.

7. The method of claim 5, wherein a version number of the access stratum context signaling is v1530.

8. The method of claim 7, wherein the access stratum context signaling comprises FlightPathInformationReport-r15, the FlightPathInformationReport-r15 is an information element for flight path information report, and is used for carrying flight path related information, and r15 is a version number, and is used to indicate the information element for flight path information report.

9. A base station for transmitting flight information, comprising:
a processor; and
a memory for storing instructions executable by the processor;
wherein the instructions when executed by the processor cause the base station to carry out to:
generate handover request related signaling, the handover request related signaling carrying flight path related information of an unmanned aerial vehicle; and
send the handover request related signaling to a target base station,
wherein the handover request related signaling comprises handover required signaling,
wherein the processor is further configured to:
send the handover required signaling to a Mobility Management Entity, MME, through an S1 interface, and instruct the MME to send second handover request signaling to the target base station, the second handover request signaling carrying the flight path related information of the unmanned aerial vehicle,
wherein a source to target transparent container information element in the handover required signaling carries the flight path related information of the unmanned aerial vehicle,
**characterized in that** access stratum context signaling in handover preparation information signaling in the source to target transparent container information element carries the flight path related information of the unmanned aerial vehicle.

10. The base station of claim 9, wherein a source to target transparent container information element in the second handover request signaling carries the flight path related information of the unmanned aerial vehicle.

11. The base station of claim 9, wherein a version number of the access stratum context signaling is v1530.

12. The base station of claim 11, wherein the access stratum context signaling comprises FlightPathInformationReport-r15, the FlightPathInformationReport-r15 is an information element for flight path information report, and is used for carrying flight path related information, and r15 is a version number, and is used to indicate the information element for flight path information report.

13. A Mobility Management Entity, MME, for transmitting flight information, comprising:
a processor; and
a memory for storing instructions executable by the processor;
wherein the instructions when executed by the processor cause the MME to carry out to:
receive handover required signaling sent by a source base station, the handover required signaling carrying flight path related information of an unmanned aerial vehicle; and
send second handover request signaling to a target base station, the second handover request signaling carrying the flight path related information of the unmanned aerial vehicle,
wherein a source to target transparent container information element in the handover required signaling carries the flight path information of the unmanned aerial vehicle,
**characterized in that** access stratum context signaling in handover preparation information signaling in the source to target transparent container information element carries the flight path related information of the unmanned aerial vehicle.

14. The MME of claim 13, wherein a source to target transparent container information element in the second handover request signaling carries the flight path related information of the unmanned aerial vehicle.

15. The MME of claim 13, wherein a version number of the access stratum context signaling is v1530,
wherein the access stratum context signaling comprises FlightPathInformationReport-r15, the FlightPathInformationReport-r15 is an information element for flight path information report, and is used for carrying flight path related information, and r15 is a version number, and is used to indicate the information element for flight path information report.

## Patentansprüche

1. Verfahren zur Übermittlung von Fluginformationen, angewendet auf der Seite einer Basisstation, umfassend:
Erzeugen von Signalisierung im Zusammenhang mit einer Handover-Anforderung, wobei die Signalisierung im Zusammenhang mit einer Handover-Anforderung Informationen zur Flugbahn eines unbemannten Luftfahrzeugs enthält (101);
und Senden der Signalisierung im Zusammenhang mit einer Handover-Anforderung an eine Zielbasisstation (102),
wobei die Signalisierung im Zusammenhang mit einer Handover-Anforderung die für das Handover erforderliche Signalisierung umfasst,
wobei das Senden der Signalisierung im Zusammenhang mit einer Handover-Anforderung an die Zielbasisstation (102) Folgendes umfasst:
Senden der für das Handover erforderlichen Signalisierung an eine Mobilitätsmanagementeinheit (Mobility Management Entity, MME) über eine S1-Schnittstelle und Anweisen der MME, eine zweite Handover-Anforderungssignisierung an die Zielbasisstation zu senden, wobei die zweite Handover-Anforderungssignalisierung die Informationen zur Flugbahn des unbemannten Luftfahrzeugs enthält (302),
wobei ein transparentes Quelle-Ziel-Containerinformationselement in der für das Handover erforderlichen Signalisierung die Informationen zur Flugbahn des unbemannten Luftfahrzeugs enthält,
**dadurch gekennzeichnet, dass** die Access-Stratum-Kontextsignalisierung in Signalisierung mit Informationen zur Handover-Vorbereitung in dem transparenten Quelle-Ziel-Containerinformationselement die Informationen zur Flugbahn des unbemannten Luftfahrzeugs enthält.

2. Verfahren nach Anspruch 1, wobei ein transparentes Quelle-Ziel-Containerinformationselement in der zweiten Signalisierung im Zusammenhang mit einer Handover-Anforderung die Informationen zur Flugbahn des unbemannten Luftfahrzeugs enthält.

3. Verfahren nach Anspruch 1, wobei eine Versionsnummer der Access-Stratum-Kontextsignalisierung V1530 ist.

4. Verfahren nach Anspruch 3, wobei die Access-Stratum-Kontextsignalisierung FlightPathInformationReport-r15 umfasst, wobei FlightPathInformationReport-r15 ein Informationselement für einen Bericht mit Informationen zur Flugbahn ist und zum Transportieren von Informationen zur Flugbahn verwendet wird, und r15 eine Versionsnummer ist und zur Bezeichnung des Informationselements für den Bericht mit Informationen zur Flugbahn dient.

5. Verfahren zur Übermittlung von Fluginformationen, angewendet auf eine Mobilitätsmanagementeinheit (Mobility Management Entity, MME), umfassend:
Empfangen von für das Handover erforderlicher Signalisierung, die durch eine Quellen-Basisstation gesendet wurden, wobei die für das Handover erforderliche Signalisierung Informationen zur Flugbahn eines unbemannten Luftfahrzeugs enthält (401); und
Senden einer zweiten Handover-Anforderungssignalisierung an eine Zielbasisstation, wobei die zweite Handover-Anforderungssignalisierung die Informationen zur Flugbahn des unbemannten Luftfahrzeugs enthält (402),
wobei ein transparentes Quelle-Ziel-Containerinformationselement in der für das Handover erforderlichen Signalisierung die Informationen zur Flugbahn des unbemannten Luftfahrzeugs enthält,
**dadurch gekennzeichnet, dass** die Access-Stratum-Kontextsignalisierung in Signalisierung mit Informationen zur Handover-Vorbereitung in dem transparenten Quelle-Ziel-Containerinformationselement die Informationen zur Flugbahn des unbemannten Luftfahrzeugs enthält.

6. Verfahren nach Anspruch 5, wobei ein transparentes Quelle-Ziel-Containerinformationselement in der zweiten Handover-Anforderungssignalisierung die Informationen zur Flugbahn des unbemannten Luftfahrzeugs enthält.

7. Verfahren nach Anspruch 5, wobei eine Versionsnummer der Access-Stratum-Kontextsignalisierung V1530 ist.

8. Verfahren nach Anspruch 7, wobei die Access-Stratum-Kontextsignalisierung FlightPathInformationReport-r15 umfasst, wobei FlightPathInformationReport-r15 ein Informationselement für einen Bericht mit Informationen zur Flugbahn ist und zum Transportieren von Informationen zur Flugbahn verwendet wird, und r15 eine Versionsnummer ist und zur Bezeichnung des Informationselements für den Bericht mit Informationen zur Flugbahn dient.

9. Basisstation zur Übermittlung von Fluginformationen, umfassend:
einen Prozessor; und
einen Speicher zum Speichern von durch den Prozessor ausführbaren Anweisungen;
wobei die Anweisungen, wenn sie durch den Prozessor ausgeführt werden, die Basisstation veranlassen, Folgendes durchzuführen:
Erzeugen von Signalisierung im Zusammenhang mit einer Handover-Anforderung, wobei die Signalisierung im Zusammenhang mit einer Handover-Anforderung Informationen zur Flugbahn eines unbemannten Luftfahrzeugs enthält; und
Senden der Signalisierung im Zusammenhang mit einer Handover-Anforderung an eine Zielbasisstation,
wobei die Signalisierung im Zusammenhang mit einer Handover-Anforderung die für das Handover erforderliche Signalisierung umfasst, wobei der Prozessor weiter konfiguriert ist zum:
Senden der für das Handover erforderlichen Signalisierung an eine Mobilitätsmanagementeinheit (Mobility Management Entity, MME) über eine S1-Schnittstelle und Anweisen der MME, eine zweite Handover-Anforderungssignisierung an die Zielbasisstation zu senden, wobei die zweite Handover-Anforderungssignalisierung die Informationen zur Flugbahn des unbemannten Luftfahrzeugs enthält,
wobei ein transparentes Quelle-Ziel-Containerinformationselement in der für das Handover erforderlichen Signalisierung die Informationen zur Flugbahn des unbemannten Luftfahrzeugs enthält,
**dadurch gekennzeichnet, dass** die Access-Stratum-Kontextsignalisierung in Signalisierung mit Informationen zur Handover-Vorbereitung in dem transparenten Quelle-Ziel-Containerinformationselement die Informationen zur Flugbahn des unbemannten Luftfahrzeugs enthält.

10. Basisstation nach Anspruch 9, wobei ein transparentes Quelle-Ziel-Containerinformationselement in der zweiten Signalisierung im Zusammenhang mit einer Handover-Anforderung die Informationen zur Flugbahn des unbemannten Luftfahrzeugs enthält.

11. Basisstation nach Anspruch 9, wobei eine Versionsnummer der Access-Stratum-Kontextsignalisierung V1530 ist.

12. Basisstation nach Anspruch 11, wobei die Access-Stratum-Kontextsignalisierung FlightPathInformationReport-r15 umfasst, wobei FlightPathInformationReport-r15 ein Informationselement für einen Bericht mit Informationen zur Flugbahn ist und zum Transportieren von Informationen zur Flugbahn verwendet wird, und r15 eine Versionsnummer ist und zur Bezeichnung des Informationselements für den Bericht mit Informationen zur Flugbahn dient.

13. Mobilitätsmanagementeinheit (Mobility Management Entity, MME) zur Übermittlung von Fluginformationen, umfassend:
einen Prozessor; und
einen Speicher zum Speichern von durch den Prozessor ausführbaren Anweisungen;
wobei die Anweisungen, wenn sie durch den Prozessor ausgeführt werden, die MME veranlassen, Folgendes durchzuführen:
Empfangen von für das Handover erforderlicher Signalisierung, die durch eine Quellen-Basisstation gesendet wurden, wobei die für das Handover erforderliche Signalisierung Informationen zur Flugbahn eines unbemannten Luftfahrzeugs enthält; und
Senden einer zweiten Handover-Anforderungssignalisierung an eine Zielbasisstation, wobei die zweite Handover-Anforderungssignalisierung die Informationen zur Flugbahn des unbemannten Luftfahrzeugs enthält,
wobei ein transparentes Quelle-Ziel-Containerinformationselement in der für das Handover erforderlichen Signalisierung die Informationen zur Flugbahn des unbemannten Luftfahrzeugs enthält,
**dadurch gekennzeichnet, dass** die Access-Stratum-Kontextsignalisierung in Signalisierung mit Informationen zur Handover-Vorbereitung in dem transparenten Quelle-Ziel-Containerinformationselement die Informationen zur Flugbahn des unbemannten Luftfahrzeugs enthält.

14. MME nach Anspruch 13, wobei ein transparentes Quelle-Ziel-Containerinformationselement in der zweiten Signalisierung im Zusammenhang mit einer Handover-Anforderung die Informationen zur Flugbahn des unbemannten Luftfahrzeugs enthält.

15. MME nach Anspruch 13, wobei eine Versionsnummer der Access-Stratum-Kontextsignalisierung V1530 ist,
wobei die Access-Stratum-Kontextsignalisierung FlightPathInformationReport-r15 umfasst, wobei FlightPathInformationReport-r15 ein Informationselement für einen Bericht mit Informationen zur Flugbahn ist und zum Transportieren von Informationen zur Flugbahn verwendet wird, und r15 eine Versionsnummer ist und zur Bezeichnung des Informationselements für den Bericht mit Informationen zur Flugbahn dient.

## Revendications

1. Procédé de transmission d'informations de vol, appliqué à un côté station de base, comprenant :
la génération d'une signalisation liée à une demande de transfert intercellulaire, la signalisation liée à une demande de transfert intercellulaire transportant des informations liées à la trajectoire de vol d'un véhicule aérien sans pilote (101) ;
et l'envoi de la signalisation liée à une demande de transfert intercellulaire à une station de base cible (102),
dans lequel la signalisation liée à une demande de transfert intercellulaire comprend une signalisation requise pour un transfert intercellulaire,
dans lequel l'envoi de la signalisation liée à une demande de transfert intercellulaire à la station de base cible (102) comprend :
l'envoi de la signalisation requise pour un transfert intercellulaire à une entité de gestion de la mobilité, MME, via une interface S1, et l'instruction à la MME d'envoyer une seconde signalisation de demande de transfert intercellulaire à la station de base cible, la seconde signalisation de demande de transfert intercellulaire transportant les informations liées à la trajectoire de vol du véhicule aérien sans pilote (302),
dans lequel un élément d'informations de conteneur transparent source vers cible dans la signalisation requise pour un transfert intercellulaire transporte les informations liées à la trajectoire de vol du véhicule aérien sans pilote,
**caractérisé en ce qu'**une signalisation de contexte de strate d'accès dans une signalisation d'informations de préparation de transfert intercellulaire dans l'élément d'informations de conteneur transparent source vers cible transporte les informations liées à la trajectoire de vol du véhicule aérien sans pilote.

2. Procédé selon la revendication 1, dans lequel un élément d'informations de conteneur transparent source vers cible dans la seconde signalisation de demande de transfert intercellulaire transporte les informations liées à la trajectoire de vol du véhicule aérien sans pilote.

3. Procédé selon la revendication 1, dans lequel un numéro de version de la signalisation de contexte de strate d'accès est v1530.

4. Procédé selon la revendication 3, dans lequel la signalisation de contexte de strate d'accès comprend FlightPathInformationReport-r15, FlightPathInformationReport-r15 est un élément d'informations destiné à un rapport d'informations de trajectoire de vol, et est utilisé pour transporter des informations liées à la trajectoire de vol, et r15 est un numéro de version, et est utilisé pour indiquer l'élément d'informations destiné au rapport d'informations de trajectoire de vol.

5. Procédé de transmission d'informations de vol, appliqué à un côté entité de gestion de la mobilité, MME, comprenant :
la réception d'une signalisation requise pour un transfert intercellulaire envoyée par une station de base source, la signalisation requise pour un transfert intercellulaire transportant des informations liées à la trajectoire de vol d'un véhicule aérien sans pilote (401) ; et
l'envoi d'une seconde signalisation de demande de transfert intercellulaire à une station de base cible, la seconde signalisation de demande de transfert intercellulaire transportant les informations liées à la trajectoire de vol du véhicule aérien sans pilote (402),
dans lequel un élément d'informations de conteneur transparent source vers cible dans la signalisation requise pour un transfert intercellulaire transporte les informations de trajectoire de vol du véhicule aérien sans pilote,
**caractérisé en ce qu'**une signalisation de contexte de strate d'accès dans une signalisation d'informations de préparation de transfert intercellulaire dans l'élément d'informations de conteneur transparent source vers cible transporte les informations liées à la trajectoire de vol du véhicule aérien sans pilote.

6. Procédé selon la revendication 5, dans lequel un élément d'informations de conteneur transparent source vers cible dans la seconde signalisation de demande de transfert intercellulaire transporte les informations liées à la trajectoire de vol du véhicule aérien sans pilote.

7. Procédé selon la revendication 5, dans lequel un numéro de version de la signalisation de contexte de strate d'accès est v1530.

8. Procédé selon la revendication 7, dans lequel la signalisation de contexte de strate d'accès comprend FlightPathInformationReport-r15, FlightPathInformationReport-r15 est un élément d'informations destiné à un rapport d'informations de trajectoire de vol, et est utilisé pour transporter des informations liées à la trajectoire de vol, et r15 est un numéro de version, et est utilisé pour indiquer l'élément d'informations destiné au rapport d'informations de trajectoire de vol.

9. Station de base pour transmettre des informations de vol, comprenant :
un processeur ; et
une mémoire pour stocker des instructions exécutables par le processeur ;
dans laquelle les instructions, lorsqu'elles sont exécutées par le processeur, amènent la station de base à effectuer :
la génération d'une signalisation liée à une demande de transfert intercellulaire, la signalisation liée à une demande de transfert intercellulaire transportant des informations liées à la trajectoire de vol d'un véhicule aérien sans pilote ; et
l'envoi de la signalisation liée à une demande de transfert intercellulaire à une station de base cible,
dans laquelle la signalisation liée à une demande de transfert intercellulaire comprend une signalisation requise pour un transfert intercellulaire, dans laquelle le processeur est en outre configuré pour :
envoyer la signalisation requise pour le transfert intercellulaire à une entité de gestion de la mobilité, MME, via une interface S1, et donner à la MME l'instruction d'envoyer une seconde signalisation de demande de transfert intercellulaire à la station de base cible, la seconde signalisation de demande de transfert intercellulaire transportant les informations liées à la trajectoire de vol du véhicule aérien sans pilote,
dans laquelle un élément d'informations de conteneur transparent source vers cible dans la signalisation requise pour un transfert intercellulaire transporte les informations liées à la trajectoire de vol du véhicule aérien sans pilote,
**caractérisée en ce qu'**une signalisation de contexte de strate d'accès dans une signalisation d'informations de préparation de transfert intercellulaire dans l'élément d'informations de conteneur transparent source vers cible transporte les informations liées à la trajectoire de vol du véhicule aérien sans pilote.

10. Station de base selon la revendication 9, dans laquelle un élément d'informations de conteneur transparent source vers cible dans la seconde signalisation de demande de transfert intercellulaire transporte les informations liées à la trajectoire de vol du véhicule aérien sans pilote.

11. Station de base selon la revendication 9, dans laquelle un numéro de version de la signalisation de contexte de strate d'accès est v1530.

12. Station de base selon la revendication 11, dans laquelle la signalisation de contexte de strate d'accès comprend FlightPathInformationReport-r15, FlightPathInformationReport-r15 est un élément d'informations destiné à un rapport d'informations de trajectoire de vol, et est utilisé pour transporter des informations liées à la trajectoire de vol, et r15 est un numéro de version, et est utilisé pour indiquer l'élément d'informations destiné au rapport d'informations de trajectoire de vol.

13. Entité de gestion de la mobilité, MME, pour transmettre des informations de vol, comprenant :
un processeur ; et
une mémoire pour stocker des instructions exécutables par le processeur ;
dans laquelle les instructions, lorsqu'elles sont exécutées par le processeur, amènent la MME à effectuer :
la réception d'une signalisation requise pour un transfert intercellulaire envoyée par une station de base source, la signalisation requise pour un transfert intercellulaire transportant des informations liées à la trajectoire de vol d'un véhicule aérien sans pilote ; et
l'envoi d'une seconde signalisation de demande de transfert intercellulaire à une station de base cible, la seconde signalisation de demande de transfert intercellulaire transportant les informations liées à la trajectoire de vol du véhicule aérien sans pilote,
dans laquelle un élément d'informations de conteneur transparent source vers cible dans la signalisation requise pour un transfert intercellulaire transporte les informations de trajectoire de vol du véhicule aérien sans pilote,
**caractérisée en ce qu'**une signalisation de contexte de strate d'accès dans une signalisation d'informations de préparation de transfert intercellulaire dans l'élément d'informations de conteneur transparent source vers cible transporte les informations liées à la trajectoire de vol du véhicule aérien sans pilote.

14. MME selon la revendication 13, dans laquelle un élément d'informations de conteneur transparent source vers cible dans la seconde signalisation de demande de transfert intercellulaire transporte les informations liées à la trajectoire de vol du véhicule aérien sans pilote.

15. MME selon la revendication 13, dans laquelle un numéro de version de la signalisation de contexte de strate d'accès est v1530,
dans laquelle la signalisation de contexte de strate d'accès comprend FlightPathInformationReport-r15, FlightPathInformationReport-r15 est un élément d'informations destiné à un rapport d'informations de trajectoire de vol, et est utilisé pour transporter des informations liées à la trajectoire de vol, et r15 est un numéro de version, et est utilisé pour indiquer l'élément d'informations destiné au rapport d'informations de trajectoire de vol.
